# EUROPÄISCHE PATENTSCHRIFT

(11) **EP 1 336 079 B1**
(45) Veröffentlichungstag und Bekanntmachung des Hinweises auf die Patenterteilung: **01.12.2004**
(21) Anmeldenummer: 01993813.3
(22) Anmeldetag: 29.09.2001
(51) Int. Cl.: G01C 21/32

(54) **VERFAHREN ZUR ERSTELLUNG VON EIN OBJEKT GEOGRAFISCH EINDEUTIG REFERENZIERENDER APPENDICES**
METHOD FOR CREATING APPENDICES THAT CLEARLY REFERENCE THE LOCATION OF AN OBJECT
PROCEDE POUR REALISER DES APPENDICES REFERENCANT CLAIREMENT LA GEOGRAPHIE D'UN OBJET

(30) Priorität: 07.11.2000 DE 10055195
(43) Veröffentlichungstag der Anmeldung: 20.08.2003
(73) Patentinhaber: ROBERT BOSCH GMBH, 70442 Stuttgart (DE)
(72) Erfinder: HESSLING, Matthias, 31141 Hildesheim (DE); BUECHER, Andreas, 37520 Osterode (DE); HAHLWEG, Cornelius, 22147 Hamburg (DE); PFEIFFER, Heinz, Werner, 31249 Hohenhameln (DE); BRANDES, Henry, 31556 Woelpinghausen (DE)
(86) Internationale Anmeldenummer: PCT/DE2001/003767
(87) Internationale Veröffentlichungsnummer: WO 2002/039064

(56) Entgegenhaltungen:
- EP-A- 1 020 832
- DE-A- 19 829 801
- US-A- 5 745 867
- US-A- 5 919 245
- US-A- 6 081 803

## Beschreibung

### Stand der Technik

Die Erfindung betrifft ein Verfahren zur Erstellung von ein Objekt geografisch eindeutig referenzierender Appendices.

Zur Übertragung von ortsbezogenen Informationen, beispielsweise Verkehrsmeldungen, sind verschiedene Verfahren bekannt. Beim TMC (traffic message channel) wird beispielsweise ein Ort anhand eines Ortscodes übertragen. Seine geografische Lage und damit auch seine örtliche Zuordnung der Meldung werden erst durch eine sogenannte Ortsdatenbank im Empfänger ermöglicht. Zu Navigationszwecken werden digitale Strassenkarten verwendet, bei denen die einzelnen Objekte durch ihre geografische Lage und durch ihre Strassenverbindungen gekennzeichnet sind. Zur Übertragung beliebiger ortsbezogener Informationen an Empfänger, die eine geeignete Datenbank (Empfängerdatenbank) enthalten, erfolgt eine Codierung - auch Referenzierung genannt - mit Hilfe eines geografischen Kontextes. Diese Referenzierung geht über die Angabe von geografischen Daten hinaus, da diese Daten Mehrdeutigkeiten nicht ausschliessen können. Ausserdem können Abweichungen der Datenbanken, beispielsweise verschiedener Hersteller vorliegen. Es wird deshalb nachfolgend zur Beschreibung all dieser Daten von referenzierenden Appendices gesprochen.

In den Patentanmeldungen DE 10038343.2, DE 10009149.0 und DE 10023309.9 wurden bereits Verfahren vorgeschlagen, mit denen eine sichere Referenzierung in Systemen mit verteilten geografischen Datenbasen möglich ist. Über die ursprüngliche Aufgabe hinaus, Referenzen zwischen Objekten, die in zwei unterschiedlichen Datenbasen zwar vorhanden, aber jeweils andersartig beschrieben sind, zu bilden, erlauben es die Verfahren in vorgenannten Patentanmeldungen, geografische Objekte navigabel in eine Datenbasis einzubinden, in der sie urspünglich nicht vorhanden sind. Das Objekt, z.B. ein Parkhaus, wird hierzu um Appendices ergänzt, z.B. um die Geometrie eines Zufahrtsweges. Empfängerseitig wird mittels Mustererkennung ein zumindest teilweises map-matching erzielt, wobei objektseitige und nicht in der Datenbasis vorhandene Teile der Geometrie z.B. als Zufahrt neu eigetragen werden.

Dokument US-A-6 081 803 beschreibt ein Verfahren, bei dem Objekte zusemmen mit Pfadedaten erstellt werden.

### Vorteile der Erfindung

Mit den Massnahmen gemäss den Ansprüchen ist es möglich Appendices zu erstellen, die Objekte eindeutig geografisch referenzieren. Damit ist die automatische Erstellung umfangreicher POI(places of interest)- Datenbanken oder sogar ein "on-the-fly-referencing" möglich.

Im Gegensatz zu den Verfahren in den vorgenannten Patentanmeldungen muss die Auswahl der Appendices, die einem Objekt eindeutig zuzuordnen sind, nicht von Hand erfolgen, sondern geschieht nach einem zuverlässigen automatischen Verfahren, das insbesondere anhand von Vektorkarten durchgeführt wird. Bereits bei der Bildung von Pfaden für die Referenzierung der Objekte werden Kriterien für die Bewertung und Auswahl eines Pfades angewendet, die als Abbruchkriterien dienen können, z.B. wenn aufgrund der vorgegebenen Fahrtrichtung innerhalb des Pfades (Einbahnstrasse) ein direktes Anfahren des Objektes nicht möglich ist. Neben diesen Kriterien können auch noch weitere Kriterien vorgesehen werden, um jenen Pfad auszuwählen, der mindestens eines der Kriterien am besten erfüllt, also am wahrscheinlichsten ist.

Gemäss der Ausgestaltung des Anspruchs 2 werden als Pfade Koordinatenketten verwendet, die mindestens teilweise auf Verkehrswegen liegen, die in einer Empfängerdatenbasis enthalten sind und die charakteristischen Eigenheiten von Teilen eines Verkehrswegenetzes umfassen.

Als Basis für die Auswahl der Pfade eignen sich gemäss Anspruch 3 Vektorkarten. Sonstiges Datenmaterial über geografische Objekte und Fahrwege, z.B. gedrucktes Kartenmaterial ist vorab in Vektorkarten aufzubereiten.

Anspruch 4 zeigt einige Kriterien zur Erstellung der Appendices auf, die jeweils einzeln oder in Kombination angewendet werden können.

Anspruch 5 führt einige beispielhafte Abbruchkriterien auf. Da diese Abbruchkriterien bereits bei der Bildung der Pfade angewendet werden, werden frühzeitig Pfadalternativen ausgeschlossen, die nicht verwirklichbar oder nicht eindeutig genug sind. Solche ausgeschlossenen Pfadalternativen belasten deshalb nicht die baumartige Pfadbildung vom Objekt ausgehend.

Anspruch 6 zeigt Kriterien zur Bestimmung der geometrischen Eindeutigkeit bei der Pfadbildung und damit der Appendices auf.

Durch die Skalierung der Kriterien gemäss Anspruch 7 kann die Empfängerdatenbasis auf die erzeugende Datenbank abgestimmt werden, oder es ist möglich die Empfängerdatenbasis ganz nach den Bedürfnissen des Empfängers (Nutzers) zu erstellen, z.B. hinsichtlich der Auflösung, Objektauswahl, usw.

Gemäss Anspruch 8 kann die Skalierung dynamisch in einem iterativen Prozess durchgeführt werden.

In Systemen, bei denen Informationen vorgenannter Art online, also auf Kundenabfrage hin codiert werden, kann der Test auf ein eindeutiges Korrelationsmaximum hin gemäss Anspruch 9 nicht nur in der erzeugenden Datenbasis durchgeführt werden, sondern auch auf die Empfänger-(Kunden-) Datenbasis ausgedehnt werden bzw. dorthin verlagert werden. Dadurch ist es beispielsweise möglich, den zu überstreichenden Strassenklassenbereich, also die Skalierung im Sinne des Maßstabes einzuregeln und damit zu optimieren.

Die Referenzierung eines Pfades und damit eines Appendix wird gemäss Anspruch 10 so weit durchgeführt, bis ein der Empfängerdatenbasis bekannter vorgegebener Vertreter einer Objektklasse erreicht wird. Damit ist sichergestellt, dass die Referenzierung eines Objekts auf jeden Fall soweit durchgeführt wird, bis eine Anbindung an das vom Nutzer gespeicherte Verkehrsnetz erreicht ist.

### Zeichnungen

Anhand der Zeichnungen werden Ausführungsbeispiele der Erfindung erläutert. Es zeigen
Fig. 1 ein Beispiel einer Pfadauswahl für ein zu referenzierendes Parkhaus,
Fig. 2 die Übertragung der Appendices von einer erzeugenden Datenbasis zu einer Empfängerdatenbasis.

### Beschreibung von Ausführungsbeispielen

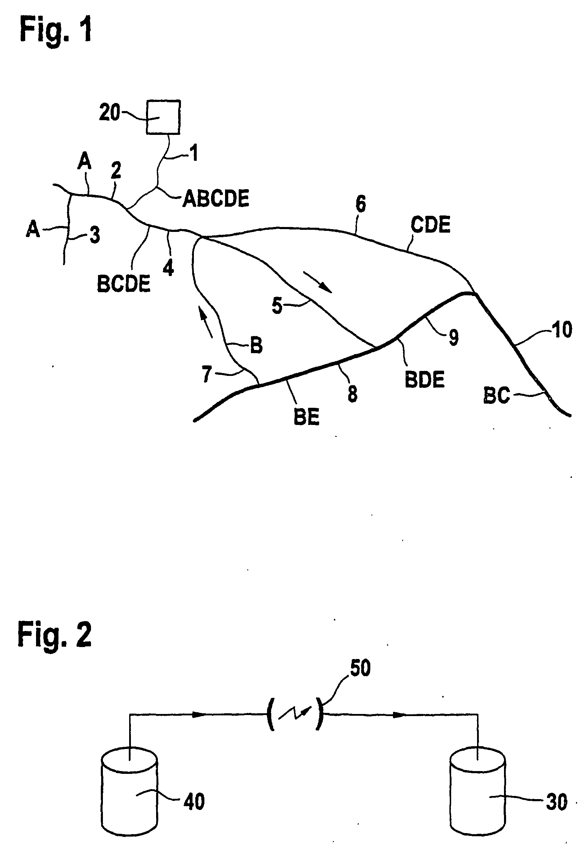

Wie Fig. 1 zeigt, wird von einem Objekt 20, z.B. von einem Parkhaus, ausgehend ein Baum möglicher Pfade A bis E erstellt. Das eigentliche Objekt 20 wird dabei um mindestens einen Appendix ergänzt, der die Geometrie des Zufahrtsweges beschreibt, wobei dieser zumindest in Teilen mit hoher Wahrscheinlichkeit in der Empfängerdatenbasis vorhanden sein sollte und eine geometrische Form aufweist, die im betrachteten Gebiet eindeutig ist. Die in Fig. 1 gezeigte Topologie weist drei verschiedene Strassenklassen auf. Der Teilpfad 1 (dünnste Linienführung), d.h. die direkte Zufahrt ins Parkhaus ist der am niedrigsten klassifizierte Weg bzw. Strasse; er findet sich im allgemeinen auf keiner vorgefertigten Karte und muss in jedem Falle, da es keine Alternative gibt, im Appendix erscheinen. Die Teilpfade 2, 3, 4, 5, 6, 7 (mittelstarke Linienführung) sind teilweise alternative Wege/Strassen und gehören der mittleren Klassifizierung an. Die Teilpfade 8, 9 und 10 sind die am höchsten klassifizierten Wege bzw. Strassen des Wege- bzw. Strassennetzes (dicke Linienführung). Sie sollten komplett sowohl in der erzeugenden Datenbasis als auch in der Empfängerdatenbasis erscheinen und werden daher als bevorzugte Teilpfade ausgewählt und im Appendix codiert. Als Kriterien zur Bewertung und Auswahl der Pfade/Teilpfade bei der Erstellung der ein Objekt geografisch eindeutig referenzierender Appendices werden folgende gewählt:
- sie führen vom Objekt 20 aus von einem nieder- in ein höherklassifiziertes Wege- bzw. Strassennetz hinein,
- sie weisen eine Geometrie auf, die im näheren geografischen Umfeld eindeutig ist,
- sie stellen unter navigationstechnischen Gesichtspunkten einen echten Weg (Beafahrbarkeit, Einbahnstrassen usw.) zum Objekt 20 hin und/oder vom Objekt weg dar,
- sie weisen aus Effizienzgründen eine geringe zu codierende Länge auf, damit sie insbesondere für die Übertragung und empfängerseitige Decodierung ohne grossen Aufwand bearbeitet werden können.

Bei der Erstellung des vom Objekt 20 ausgehenden logischen Baumes möglicher Pfade werden bereits vorgegebene Abbruchkriterien angewendet, beispielsweise folgende Kriterien:
- Rückführung auf eine niedriger klassifizierte Strasse als die aktuelle,
- Richtungsangabe weist nicht zum Objekt hin (Einbahnstrasse) und scheidet damit aus, da in jedem Falle eine Zufahrt möglich sein soll.

Die Pfade werden nach den vorgenannten Kriterien geordnet und ausgewählt und es wird mindestens ein Pfad als Appendix codiert, der mindestens eines vogenannter Kriterien sowie gegebenenfalls mindestens eines von weiteren Kriterien, das eines der vorgenannten Kriterien sein kann, am besten erfüllt; d.h. ein eindeutiges Korrelationsmaximum darstellt. Als Pfade werden dabei Koordinatenketten verwendet, die mindestens teilweise auf Verkehrswegen liegen, die in einer Empfängerdatenbasis 30 enthalten sind und die charakteristischen Eigenschaften von Teilen eines Verkehrswegenetzes umfassen.

Zur Bestimmung der geometrischen Eindeutigkeit können, sowohl über dem Gesamtpfad als auch sukzessive während des Aufbaus oder über Teilpfaden (strassenklassenweise), folgende Kriterien ausgewertet werden:
- es wird untersucht, ob die Summe der Beträge der (relativen) Winkeländerungen über dem Pfad/Teilpfad einen vorgegebenen Grenzwert übersteigt,
- über die Minimierung der Fehlerquadrate wird untersucht, ob Punktmengen zu einer gleichen Klasse bzw. Strasse gehören. Dazu kann durch eine nichtlineare Koordinatentransformation ein Satz von Formfaktoren gebildet werden, beispielsweise gemäss der DE 19860679 A1,
- über einen gegebenenfalls wiederholten Geometrievergleich wird untersucht, ob ein gefundener Pfad mit einem Pfad in einer erzeugenden Datenbasis 40 übereinstimmt, d.h. es wird ein eindeutiges Korrelationsmaximum ermittelt.

Durch eine Skalierung vorgenannter Kriterien kann eine Anpassung an die Daten in der Empfängerdatenbasis vorgenommen werden. Durch diese Massnahme kann eine speziell auf die Bedürfnisse des Empfängers(Nutzers) zugeschnittene Auswahl hinsichtlich der Auflösung, Objektauswahl, Detailtiefe usw. getroffen werden. Die Skalierung kann auch in einem iterativen Prozess dynamisch durchgeführt werden. Die Annäherung an die Bedürfnisse des Kunden erfolgt dann schrittweise mit fortschreitendem Datenbestand.

In Systemen, bei denen georeferenzierende Informationen online, d.h. auf Kundenabfrage hin codiert werden, kann der Test auf ein eindeutiges Korrelationsmaximum auch auf die Datenbasis des Empfängerdatenbasis ausgedehnt und/oder verlagert werden. Dadurch ist es möglich den zu überstreichenden Strassenklassenbereich, also die Skalierung im Sinne des Maßstabes einzuregeln und damit zu optimieren.

Bei dem in Fig.1 dargestellten Beispiel kann die Codierung des Parkhauses - Objekt 20 - folgendermassen vorgenommen werden:
- Aufsetzen auf Objekt 20,
- Aufstellen des Baumes vom Objekt 20 aus (unvollständig) und der sich ergebenden Pfade. Dabei dienen als Abbruchkriterien 1. Rückführung auf Strasse niederer Klasse als aktuelle und 2. Befahrbarkeit zum Objekt 20.

Es ergeben sich folgende Pfade A bis E:
A) Teilpfade 1 2 3
B) Teilpfade 1 4 7 8 9 10
C) Teilpfade 1 4 6 10
D) Teilpfade 1 4 6 9
E) Teilpfade 1 4 6 9 8.

Die Bildung von Pfaden mit dem Teilpfad 5 wurde ausgeschlossen (mittels Abbruchkriterium), da die Einbahnstrasse (Markierung mit Richtungspfeil) vom Objekt weg führt.

Die Auswahl eines geeigneten Appendix erfolgt nun folgendermassen: Unter der Voraussetzung, dass zumindest die am höchsten klassifizierte Strassenklasse, in Fig. 1 mit dickster Linienführung dargestellt (Teilpfade 8, 9, 10), in der Empfängerdatenbasis 30 vorhanden ist und damit in jedem Falle Bestandteil des Appendix sein sollte, entfällt Pfad A. Pfad C verliert gegen die Pfade B, D und E, da bezogen auf die Strassenklasse die geringste geometrische Eindeutigkeit vorliegt. Dies gilt auch für D, danach folgt Pfad E. Pfad B ist also bei verlangter Eindeutigkeit in der am höchsten klassifizierten Strassenklasse als Appendix zu codieren. Im Einzelfall kann natürlich auch noch ein weiterer bzw. mehrere weitere Appendices codiert werden, insbesondere wenn sie verschiedene Kriterien am besten erfüllen. Die Codierung von zwei oder mehr Appendices ist insbesondere dann sinnvoll, wenn verschiedenes Kartenmaterial zugrunde gelegt werden soll, z.B. wenn ein Satz von Appendices auf Empfängerdatenbasen angewendet werden soll, die sich in ihrer Detailtiefe oder in der Klasse der Points of Interest unterscheiden. D.h. ein Nutzer kann die von der erzeugenden Datenbasis 40 zu seiner Empfängerdatenbasis 30 übertragenen Appendices 50 auf seine Bedürfnisse zugeschnitten effektiv nutzen (Fig.2).

Zur Auswertung der Pfade und Aufbereitung, d.h. Codierung der Appendices, eignen sich insbesondere Vektorkarten in denen die Details digital vorliegen. Für anderes Kartenmaterial inclusive gedruckter Karten ist dann eine vorherige Umwandlung in Vektorkarten notwendig.

Es kann auch gefordert werden, dass ein Appendix vom zu referenzierenden Objekt 20 aus so weit referenziert wird, d.h. der Baum von Pfaden so lange ausgedehnt wird, bis ein der Empfängerdatenbasis 30 bekannter vorgegebener vertreter einer Objektklasse auf jeden Fall erreicht ist. Dazu muss die erzeugende Datenbasis 40 die Detailtiefe der Empfängerdatenbasis zumindest partiell kennen.. Im bisher vorgestellten Beispiel würde das bedeuten, dass vom Objekt 20 - Parkhaus- aus ein wahrscheinlicher Pfad und damit ein Appendix mindestens so weit referenziert wird, bis eine am höchsten klassifizierte Strasse (Vertreter der Objektklasse) erreicht ist, die in der Empfängerdatenbasis als vorhanden vorausgesetzt wird. Die Gewichtung der Pfade kann natürlich wie zuvor geschildert erfolgen.

Ein weiteres Beispiel für eine solche Referenzierung wäre, wenn ein Empfänger in seiner Empfängerdatenbasis 30 über sämtliche (Haupt-) Bahnhöfe als Objektklasse verfügt und verlangt, dass ein referenzierender Appendix vom zu referenzierenden Objekt an einem (Haupt-) Bahnhof enden soll, weil damit die Anbindung an das Verkehrsnetz des Empfängers sichergestellt wäre.

## Patentansprüche

1. Verfahren zur Erstellung von ein Objekt geografisch eindeutig referenzierender Appendices mit folgenden Merkmalen:
- vom Objekt (20) ausgehend wird ein Baum möglicher Pfade (A...E) erstellt,
- diese Pfade (A...E) werden nach vorgegebenen Kriterien bewertet, die geeignet sind bereits bei der Bildung der Pfade als Abbruchkriterien zu dienen,
- von den übrig bleibenden Pfaden (A...E) wird mindestens jener als Appendix des Objekts (20) codiert, der mindestens eines der Kriterien sowie gegebenenfalls mindestens eines von weiteren Kriterien am besten erfüllt.

2. Verfahren nach Anspruch 1, **dadurch gekennzeichnet, dass** als Pfade (A...E) Koordinatenketten verwendet werden, die mindestens teilweise auf Verkehrswegen liegen, die in einer Empfängerdatenbasis (30) enthalten sind und die charakteristische Eigenheiten von Teilen eines Verkehrswegenetzes umfassen.

3. Verfahren nach Anspruch 1 oder 2, **dadurch gekennzeichnet, dass** als Basis für die Auswahl der Pfade Vektorkarten verwendet werden und dass sonstiges Datenmaterial über geografische Objekte und Routen inclusive gedrucktes Kartenmaterial vorab in Form von Vektorkarten aufbereitet wird.

4. Verfahren nach einem der Ansprüche 1 bis 3, **dadurch gekennzeichnet, dass** für die Erstellung der Appendices Kriterien verwendet werden, die jeweils einzeln oder in Kombination mindestens zweier solcher Kriterien zu folgenden Appendices führen:
- sie führen vom Objekt (20) aus von einem nieder- in ein höherklassifiziertes Wege- bzw. Strassennetz hinein,
- sie weisen eine Geometrie auf, die im näheren geografischen Umfeld eindeutig ist,
- sie stellen unter navigationstechnischen Gesichtspunkten einen echten Weg zum Objekt (20) hin und/oder vom Objekt weg dar,
- sie weisen eine geringe zu codierende Länge auf.

5. Verfahren nach einem der Ansprüche 1 bis 4, **dadurch gekennzeichnet, dass** als Abbruchkriterien folgende Sachverhalte dienen:
- Rückführung auf eine niedriger klassifizierte Strasse,
- Richtungsvorgabe weist nicht zum Objekt (20) hin.

6. Verfahren nach Anspruch 4 oder 5, **dadurch gekennzeichnet, dass** zur Bestimmung der geometrischen Eindeutigkeit sowohl über dem Gesamtpfad als auch sukzessive während des Aufbaus oder über Teilpfaden mindestens eines der folgenden Kriterien ausgewertet wird:
- es wird untersucht, ob die Summe der Beträge der Winkeländerungen über dem Pfad einen vorgegebenen Grenzwert übersteigen,
- über die Minimierung der Fehlerquadrate wird untersucht, ob Punktmengen zu einer gleichen Klasse bzw. Strasse gehören,
- über einen Geometrievergleich wird untersucht, ob ein gefundener Pfad mit einem Pfad in einer erzeugenden Datenbasis (40) übereinstimmt, d.h. es wird ein eindeutiges Korrelationsmaximum ermittelt.

7. Verfahren nach einem der Ansprüche 1 bis 6, **dadurch gekennzeichnet, dass** eine Skalierung vorgenannter Kriterien insbesondere nach den Anforderungen der Empfängerdatenbasis (30) vorgenommen wird.

8. Verfahren nach Anspruch 7, **dadurch gekennzeichnet, dass** die Skalierung dynamisch in einem iterativen Prozess durchgeführt wird.

9. Verfahren nach einem der Ansprüche 6 bis 8, **dadurch gekennzeichnet, dass** die Ermittlung des Korrelationsmaximums nicht nur in der erzeugenden Datenbasis (40) durchgeführt wird, sondern auch auf Empfängerdatenbasis (30) ausgedehnt und/oder verlagert wird.

10. Verfahren nach einem der Ansprüche 1 bis 9, **dadurch gekennzeichnet, dass** ein Appendix vom zu referenzierenden Objekt (20) aus so weit referenziert wird, bis ein einer/der Empfängerdatenbasis (30) bekannter vorgegebener Vertreter einer Objektklasse erreicht wird.

## Claims

1. Method for generating appendices uniquely referencing an object geographically, having the following features:
- a tree of possible paths (A...E) is generated starting from the object (20),
- these paths (A...E) are evaluated according to prescribed criteria which are already suitable as termination criteria during formation of the paths, and
- of the remaining paths (A...E) at least that one is coded as an appendix of the object (20) which best fulfils at least one of the criteria and, if appropriate, at least one of further criteria.

2. Method according to Claim 1, **characterized in that** use is made as paths (A...E) of coordinated chains which lie at least partly on traffic routes which are contained in a receiver database (30) and which comprise characteristic features of parts of a traffic route network.

3. Method according to Claim 1 or 2, **characterized in that** use is made of vector maps as a basis for the selection of the paths, and **in that** other data material relating to geographic objects and routes, including printed map material, is prepared in advance in the form of vector maps.

4. Method according to one of Claims 1 to 3, **characterized in that** use is made for generating the appendices of criteria which in each case lead individually or in a combination of at least two such criteria to the following appendices:
- they lead out from the object (20) from a lowly classified into a more highly classified route or road network,
- they have a geometry which is unique in the adjoining geographical surroundings,
- from navigational points of view they constitute a true path to the object (20) and/or from the object, and
- they have a short length to be coded.

5. Method according to one of Claims 1 to 4, **characterized in that** the following circumstances serve as termination criteria:
- return to a more lowly classified street, and
- stipulated direction does not point to the object (20).

6. Method according to Claim 4 or 5, **characterized in that** at least one of the following criteria is evaluated in order to determine the geometrical uniqueness both over the entire path and also successively during the build-up or over partial paths:
- it is investigated whether the sum of the magnitudes of the changes in angle over the path exceed a prescribed limit value,
- it is investigated via the minimization of the error squares whether point sets belong to an identical class or street, and
- it is investigated via a geometry comparison whether a path found corresponds to a path in a generating database (40), that is to say a unique correlation maximum is determined.

7. Method according to one of Claims 1 to 6, **characterized in that** a scaling of previously-mentioned criteria is undertaken, in particular according to the requirements of the receiver database (30).

8. Method according to Claim 7, **characterized in that** the scaling is carried out dynamically in an iterative process.

9. Method according to one of Claims 6 to 8, **characterized in that** the determination of the correlation maximum is carried out not only in the generating database (40), but is also extended and/or transferred to the receiver database (30).

10. Method according to one of Claims 1 to 9, **characterized in that** starting from the object (20) to be referenced an appendix is referenced until a prescribed representative, known to a/the receiver database (30), of an object class is obtained.

## Revendications

1. Procédé pour réaliser des appendices référençant clairement la géographie d'un objet,
**caractérisé en ce que**
- partant de l'objet (20), une arborescence d'itinéraires possibles (A...E) est réalisée,
- ces itinéraires (A...E) sont évalués d'après des critères prédéterminés adaptés pour servir de critères d'interruption dès la formation des itinéraires,
- à partir des itinéraires (A...E) restants, au moins chacun des itinéraires est codé sous forme d'appendice de l'objet (20) qui remplit le mieux au moins un des critères ainsi que, le cas échéant, au moins un des autres critères.

2. Procédé selon la revendication 1,
**caractérisé en ce que**
on utilise comme itinéraires (A...E), des chaînes de coordonnées se trouvant au moins partiellement sur des voies de communication contenues dans une base de données d'un récepteur (30) et comprenant les propriétés caractéristiques de segments d'un réseau de voies de communication.

3. Procédé selon la revendication 1 ou 2,
**caractérisé en ce que**
des cartes vectorielles sont utilisées pour servir de base à la sélection des itinéraires, et
des informations de données accessoires sur les objets et les routes géographiques, y compris des cartes imprimées, sont d'abord mises en forme sous la forme de cartes vectorielles.

4. Procédé selon l'une des revendications 1 à 3,
**caractérisé en ce que**
pour la réalisation des appendices, on utilise des critères qui conduisent, respectivement individuellement ou par une combinaison d'au moins deux de ces critères, aux appendices suivants :
- à partir de l'objet (20), ils conduisent, par un réseau de voies ou de rues à classification basse, à un réseau de voies ou de rues à classification élevée,
- ils présentent une géométrie claire dans l'environnement géographique le plus proche,
- ils représentent, en considérant les techniques de navigation, un itinéraire correct jusqu'à l'objet (20) et/ou depuis cet objet,
- ils présentent une faible longueur à codifier.

5. Procédé selon l'une des revendications 1 à 4,
**caractérisé en ce que**
les circonstances suivantes servent de critères d'interruption :
- réacheminement sur une route classée inférieure,
- directive de direction ne renvoyant pas à l'objet (20).

6. Procédé selon la revendication 4 ou 5,
**caractérisé en ce que**
pour définir une géométrie claire, aussi bien sur tout l'itinéraire que sur des itinéraires successifs lors de la construction, ou sur des itinéraires partiels, au moins un des critères suivants est exploité :
- on vérifie si la somme des valeurs des changements angulaires sur l'itinéraire dépasse une valeur limite prédéterminée,
- on vérifie par la technique des moindres carrés si tous les points appartiennent à une même classe ou rue,
- on vérifie par une comparaison géométrique si un itinéraire trouvé coïncide avec un itinéraire dans une base de données (40) générée, c'est-à-dire qu'on recherche une corrélation maximale univoque.

7. Procédé selon l'une des revendications 1 à 6,
**caractérisé en ce qu'**
on procède à une mise à l'échelle des critères susmentionnés notamment d'après les exigences de la base de données du récepteur (30).

8. Procédé selon la revendication 7,
**caractérisé en ce que**
la mise à l'échelle est effectuée de manière dynamique dans un processus itératif.

9. Procédé selon l'une des revendications 6 à 8,
**caractérisé en ce que**
la recherche de la corrélation maximale n'est pas uniquement effectuée dans la base de données générée mais est également étendue et/ou transférée dans la base de données du récepteur (30).

10. Procédé selon l'une des revendications 1 à 9,
**caractérisé en ce qu'**
un appendice de l'objet (20) à référencer est référencé dans la mesure où un représentant prédéterminé connu d'une/de la base de données du récepteur (30) d'une classe d'objet est atteint.
